# EUROPEAN PATENT APPLICATION

(11) **EP 4 516 580 A1**
(43) Date of publication of application: **05.03.2025**
(21) Application number: 23194295.4
(22) Date of filing: 30.08.2023
(51) Int. Cl.: B60N 2/02

(54) **METHOD FOR ADJUSTING A VEHICLE SEAT CONFIGURATION INSIDE A VEHICLE**

(71) Applicant: Volvo Car Corporation, 405 31 Göteborg (SE)
(72) Inventor: BJÖRKLUND, Magnus, 40531 Göteborg (SE); SANDAHL, Anders, 40531 Göteborg (SE); CLAESSON, Emil, 40531 Göteborg (SE); NILSSON, Pär, 40531 Göteborg (SE)
(74) Representative: Maiwald GmbH

(57) **Abstract**

The disclosure relates to method (100) for adjusting a vehicle seat configuration (20) inside a vehicle (10), the vehicle seat configuration (20) comprising a vehicle seat (21) and an actuator system for adjusting the vehicle seat configuration (20), the actuator system comprising at least one actuator (24, 26, 28), the at least one actuator (24, 26, 28) being a brushless electric motor, the method (100) comprising:
- receiving at least one signal (S 1, S2) indicative of a collision situation of the vehicle (10),
- providing, upon receival of the at least one signal (S1, S2), control instructions (CI) for the actuator system to adjust the vehicle seat configuration (20).

## Description

### TECHNICAL FIELD

The present disclosure relates to a method for adjusting a vehicle seat configuration inside a vehicle, a computer program product, a data processing apparatus and a vehicle.

### BACKGROUND ART

Vehicles are generally designed to withstand forces from impacts with large objects, such as large animals. However, an impact with a large animal may generate large deformations to a header and windscreen of the vehicle and there may be a high risk of injury to the front passengers of that vehicle. While the vehicle is designed to reduce deformation and intrusion from the object and to maintain the integrity of the structural design as much as possible, there still may be a need to reduce the risk of injury to passengers inside the vehicle when large objects impact the vehicle or, in other words, the vehicle collides with large objects.

### SUMMARY

The above-described problem of a high risk of injury of front passengers of vehicles being impacted by large objects is at least partially solved or alleviated by the subject matter of the independent claims of the present disclosure, wherein further examples are incorporated in the dependent claims.

According to a first aspect of this disclosure, there is provided a method for adjusting a vehicle seat configuration inside a vehicle, the vehicle seat configuration comprising a vehicle seat and an actuator system for adjusting the vehicle seat configuration, in particular the vehicle seat, the actuator system comprising at least one actuator. The at least one actuator may be a brushless electric motor. The method comprises
- receiving at least one signal indicative of a collision situation of the vehicle,
- providing, upon receival of the at least one signal, control instructions for the actuator system to adjust the vehicle seat configuration, in particular the vehicle seat.

Accordingly, the method of the first aspect of this disclosure provides for an adjustment of the vehicle seat configuration via control of an actuator system of a vehicle seat configuration when a signal indicative of a collision situation of the vehicle is received. Thereby, the vehicle seat configuration may be adjusted, as will be explained exemplary further below, to reduce the risk of injury of one or more passengers of the vehicle due to the collision situation.

The method may further comprise actuating the actuator system to adjust the vehicle seat configuration. In particular, the method may further comprise adjusting the vehicle seat configuration based on the actuating of the actuator system. The actuating of the actuator system may be carried out based on the provided control instructions.

The collision situation may generally refer to a situation, which may be an impact or crash of the vehicle with an object, in particular a large object such as a large animal, for example. At the time at which the signal indicative of the collision situation is received, the collision or, in other words, impact or crash does not need to have occurred or be occurring, or at least not just yet. Instead, the collision situation may be pre-detected at a time before that, which leads up to the impact. In particular, the collision situation may be pre-detectable by the vehicle and/or passenger, as will be explained exemplary further below.

When the at least one actuator is a brushless electric motor, it has been found that the vehicle seat configuration, in particular vehicle seats thereof, may be adjusted, e.g., moved in position, with very high speed. The brushless electric motor may be a brushless direct current (DC) electric motor, which is a synchronous motor using a DC electric power supply, or an electronically commutated motor, for example. In brushless electric motors, an electronic servo system may replace typically used mechanical commutator contacts. An electronic sensor of the brushless electric motor may detect the angle of the rotor and control switches such as transistors that switch current through the windings of the electric motor, either reversing the direction of the current or, in some motors turning it off, at the correct angle so the electromagnets of the electric motor create torque in one direction. This enables the method to make rapid adjustment of vehicle seats, which is important because the reaction time should be preferably as low as possible given that even with pre-collision detection, there may not be much time until the impact or crash occurs to bring the vehicle seat configuration into a state, e.g., position, where the risk of injury for the passengers is as low as possible.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

Of course, the method may be applied for any number of vehicle seats in the vehicle seat configuration. In particular, the front passenger vehicle seats of the vehicle seat configuration may be configured to be adjusted by the actuator system by means of the control instructions. Every single vehicle seat in the vehicle, or at least every one of the front passenger vehicle seats, may comprise at least one actuator, which may be configured to be adjusted based on the provided control instructions.

The vehicle seat configuration may be configured to detect occupancy of each vehicle seat, or at least the front passenger vehicle seats. The vehicle seats may be configured for adjustment only if they are occupied according to the occupancy detection. Thereby, it may be possible to avoid adjustment of unoccupied vehicle seats, which may otherwise potentially increase a risk of injury, e.g., for passengers sitting behind the adjusted vehicle seat.

Also, an unoccupied vehicle seat may be used as further structural protection of the passengers. In particular, the control instructions for the actuator system may be different for an occupied vehicle seat and an unoccupied vehicle seat. Generally, for an occupied vehicle seat, by means of its adjustment, the occupied vehicle seat, and thereby its passenger, may be moved away from the point of collision, e.g., the front of the vehicle, by moving the occupied vehicle seat backwards. Thereby, the risk that the object or a vehicle structure deformed by the collision impacts the passenger may be reduced. Further exemplary details of this will be explained in more detail below. For the unoccupied vehicle seat, on the other hand, the control instruction may be configured for the actuator system to move the vehicle seat configuration towards the point of collision, e.g., the front of the vehicle, in particular in case of a frontal collision. Thereby, the unoccupied vehicle seat may aid as additional structural protection for a passenger occupying a vehicle seat next to the unoccupied vehicle seat.

In an example, the vehicle may comprise a safety belt restraint system integrated into the vehicle seat. For example, every single vehicle seat of the vehicle seat configuration, or at least the front passenger vehicle seats, may comprise a safety belt restraint system. The safety belt restraint system may comprise a safety belt and a safety belt actuator for tensioning the safety belt. An advantage of having the safety belt restraint system integrated into the vehicle seat compared to other integrations, e.g., into the B-pillar of the vehicle, is that the vehicle seat adjustment, in particular movement, is not being restricted by a possibly tensioned safety or, in other words, seat belt in the collision situation. In particular, the occupant may thereby be directly connected to the seat and the seat movement may give a lot more occupant movement compared to when the seat belt would be mounted on the B-pillar. This allows for more flexibility, e.g., higher recline angles of the vehicle seat, in particular its backrest, and faster adjustment of the vehicle seat configuration. Together with a brushless electric motor as actuator, the adjustment of the vehicle seat configuration may be provided particularly fast and reduce the risk of injuries drastically. Similarly, the brushless electric motor design of the actuator has synergistic benefits in the speed with which the vehicle seat configuration may be adjusted in response to a collision with the further examples described herein.

In an example, one of the at least one signal may be a pre-collision signal indicative of a collision situation of the vehicle prior to a collision of the vehicle. The pre-collision signal may be provided by a computer and/or control unit of the vehicle. The pre-collision signal may be based on detection data from detection means of the vehicle, such as, for example, from one or more cameras, sensors and/or radars of the vehicle. Accordingly, the vehicle, in particular the computer and/or control unit, may be configured to pre-detect the collision situation based on corresponding camera data, sensor data, lidar data and/or radar data, for example. The pre-collision signal may be provided when a collision is determined as certain, by the vehicle, e.g., an object in front of the vehicle is being detected and it is not or not reliably possible to avoid collision of the vehicle with that object. Alternatively, or additionally, the pre-collision signal may be provided when a predefined likelihood of a collision is determined, e.g., that a chance of collision is of at least 30%, 50% or 80% or similar for a detected object.

In an example, one of the at least one signal may be an in-collision signal indicative of a collision situation of the vehicle at the time of a collision of the vehicle. The in-collision signal may be provided by the detection mean of the vehicle, e.g., the ones mentioned above with respect to the pre-collision signal, and/or a sensor of the vehicle, e.g., a crash sensor, which may be an accelerometer, force sensor, tilt sensor, pressure sensor and/or proximity sensor, for example. When the in-collision signal is provided or received, the collision may be occurring and certain. The pre-collision signal and the in-collision signal may be alternatively provided and/or received signals in the method or may be respectively additionally provided and/or received in the method, which may be at different times, e.g., prior to the collision and at the time of the collision.

In an example, the in-collision signal may be used to confirm the collision situation after receiving the pre-collision signal. Accordingly, a confirmation or check may be provided in detecting the collision situation and this confirmation may be used to make sure that a collision occurs, and the adjustment of the vehicle seat configuration is required to reduce the injury risk of one or more passengers. This may be advantageous because the control instructions for the actuator system may have a big impact on one or more passengers of the vehicle due to the potentially rapid adjustment of the vehicle seats that they occupy. In particular, if the adjustment of the vehicle seat configuration would be based on a false detection of a collision situation, this may be an unnecessary discomforting situation for the passengers. In the case of the driver, a rapid adjustment of the driver vehicle seat may even restrict the driver in his driving, as he might not be able to reach the steering wheel or pedals anymore.

In an example, the control instructions may be changed or cancelled if the in-collision signal is not received within a time value. The time value may be a predefined time. The time value, in particular predefined time, may be a maximum time estimated by the vehicle, in particular a computer and/or control unit thereof, for a detected object to collide with the vehicle, for example. Alternatively, the time value may be a fixed time for every collision situation or a fixed time for a type of collision situation identified by the vehicle, e.g., a frontal collision with an animal. Accordingly, a discomforting situation or even potentially dangerous situation of seat adjustment may not be carried out or continued if the pre-collision signal is not being confirmed by the in-collision signal within the time value, for example. It may also be possible to change the control instructions rather than cancelling them entirely if the in-collision signal is not received within the time value. For example, an adjustment rate, with which the vehicle seat is adjusted, may be reduced if the in-collision signal is not received within the time value. Generally, for the change of control instructions, the provided control instructions themselves may be changed or, alternatively, new control instructions, which have been changed over the previous control instructions, may be provided for the actuator system. Similarly, for the cancellation of control instructions, the provided control instructions themselves may be cancelled or new control instructions overwriting the previous control instructions may be provided. After cancellation it may be provided that, or the new control instructions may be configured, such that the vehicle seat configuration is readjusted to a state prior to the adjustment based on the provided control instructions.

In an example, the control instructions may be changed or cancelled after receiving the in-collision signal, which may be within the time value, in particular predefined time, mentioned above. The change of the control instructions may relate to an increase of the adjustment rate, with which the vehicle seat is adjusted, for example. For example, the vehicle seat may be adjusted at a lower adjustment rate after receiving the pre-collision signal, whereas the adjustment rate is increased after receiving the in-collision signal. The adjustment rate after receiving the pre-collision signal may be based on an estimated or determined likelihood for the collision to occur, which may be included as likelihood value or instruction in the pre-collision signal, for example. For example, the pre-collision signal may be indicative of a likelihood for the collision to occur. For example, the control instructions may be based on a likelihood for the collision to occur. In this way, it may be possible to prepare the adjustment and/or make small adjustments until the collision is actually being confirmed by the in-collision signal, at which point the adjustment rate of the actuator may be at a maximum. A cancellation of the control instructions may be useful when the in-collision signal indicates a collision at another location of the vehicle then expected based on the pre-collision detection, for example. For example, when the pre-collision signals is indicative of or predicts a frontal collision of the vehicle with an object and the collision in fact occurs at a side or back of the vehicle, there may be no advantage in adjusting the vehicle seat or vehicle seats, as this may be discomforting or even make it difficult for the driver to continue driving the vehicle, as described above.

In an example, the control instructions may be changed to reduce or increase an adjustment rate of the vehicle seat configuration, in particular of the at least one actuator. The adjustment rate may define an adjustment of the position of one or more portions of or the entire vehicle seat per time. The adjustment rate may be indicated as millimeters or degrees per second, for example. In the case of the in-collision signal not being received within the predefine time, it may be useful to reduce the adjustment rate of the vehicle seat configuration. In the case of the in-collision signal being received, in particular within the predefined time, it may be useful to increase the adjustment rate of the vehicle seat configuration.

In an example, the control instructions may be configured for adjustment, by at least one seat position actuator of the actuator system, of a position of the vehicle seat. The seat position actuator may be an additional actuator of the actuator system or the at least one actuator of the actuator system, which may be a brushless electric motor. Accordingly, the seat position may be adjusted by respectively moving one or more portions and/or the entire vehicle seat.

In an example, the control instructions may be configured for adjustment of one or more of the following positions of the vehicle seat: a height of a seating area of the vehicle seat, a relative position of the vehicle seat inside the vehicle and a recline angle of a backrest of the vehicle seat. The seating area and the backrest of the vehicle seat may also be referred to as portions of the vehicle seat herein. The backrest may be an articulated backrest or, in other words, backrest, for example. In this case, the backrest may have a top and bottom area, which may be adjusted separately from one another. For example, it may be possible only to adjust, for example recline, the top area of the articulated seatback. In particular, the control instructions may be configured for one or more of the following: lower the height of the seating area, move the relative position of the vehicle seat towards a back of the vehicle and increase the recline angle of the backrest, e.g., all together or of the top or bottom area in case of an articulated backrest.

In an example, the control instructions may be configured for tensioning, by a safety belt actuator of the actuator system, a safety belt of the safety belt restraint system. Thereby, the safety of the drivers may be further increased. In particular, by providing the control instructions for the safety belt actuator together with the vehicle seat actuator, in particular simultaneously, the tensioning of the seat belt and adjustment of the vehicle seat configuration may be provided at the same instant time to prepare the passengers for the collision with the object.

In an example, the at least one signal may be indicative of a frontal collision situation of the vehicle with an object. This may apply to the above-mentioned pre-collision signal and/or the in-collision signal. In case the in-collision signal deviates from the pre-collision signal in that it is indicative of a different collision situation, e.g., a side or back collision situation, the control instructions for adjustment of the vehicle seat configuration may be changed or cancelled, as described above, for example. For a frontal collision situation, a vehicle seat adjustment as may be provided for by the method of this disclosure may have particularly high chances of reducing a risk of injuries of the passengers, in particular of head injuries, neck injuries or injuries of upper extremities of the passengers, for example.

Alternatively, or additionally, in an example, the at least one signal may be indicative of a collision situation of an object with at least one of an A-pillar, a roof and a windshield of the vehicle.

According to a second aspect of this disclosure, there is provided a computer program product comprising instructions which, when the instructions are executed by a computer, cause the computer to carry out the method of the first aspect of this disclosure.

The computer program product may be a computer program as such or a computer readable medium having stored a computer program thereon.

According to a third aspect of this disclosure, there is provided a data processing apparatus comprising means for carrying out the method of the first aspect of this disclosure. The means may comprise a processor and/or the computer program product of the second aspect, for example. The data processing apparatus may comprise one or more modules for carrying out the steps of the method. For example, different steps of the method as herein described may be carried out by individual modules of the data processing apparatus. The modules may be implemented in hardware and/or software.

According to a fourth aspect of this disclosure, there is provided a vehicle comprising the data processing apparatus of the third aspect of this disclosure.

The vehicle may comprise a vehicle seat configuration, the vehicle seat configuration comprising a vehicle seat and an actuator system for adjusting the vehicle seat configuration, the actuator system comprising at least one actuator, wherein the at least one actuator may be a brushless electric motor. Further, the vehicle may comprise a safety belt restraint system integrated into the vehicle seat.

It should be noted that the above examples may be combined with each other irrespective of the aspect involved. Accordingly, the method may be combined with structural features and, likewise, the apparatus and vehicle may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a driving situation of a vehicle before a collision with an object;
- Figure 2: shows a method according to this disclosure;
- Figure 3: shows a portion of the vehicle of Fig. 1 prior to the collision with the object; and
- Figure 4: shows the portion of the vehicle of Fig. 3 after the collision with the object.

### DETAILED DESCRIPTION

The Figures are merely schematic representations and serve only to illustrate examples of the disclosure. Identical or equivalent elements are in principle provided with the same reference signs.

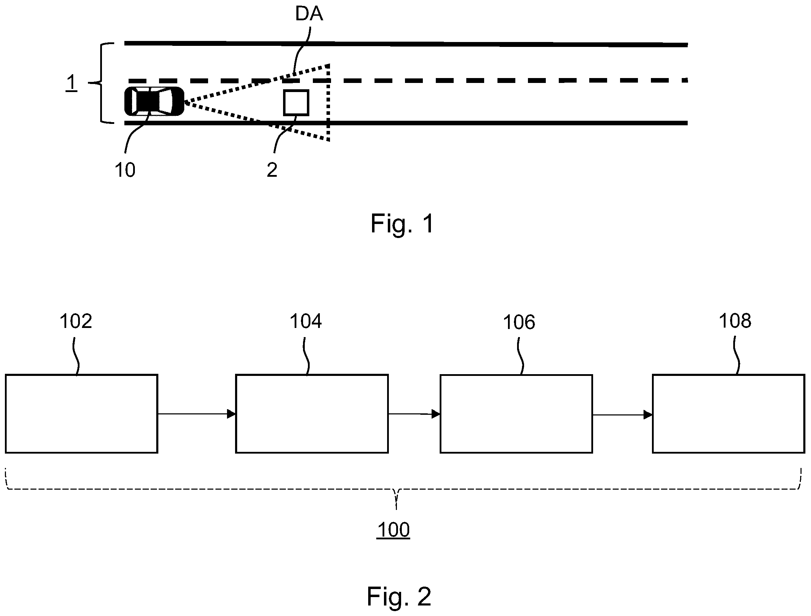

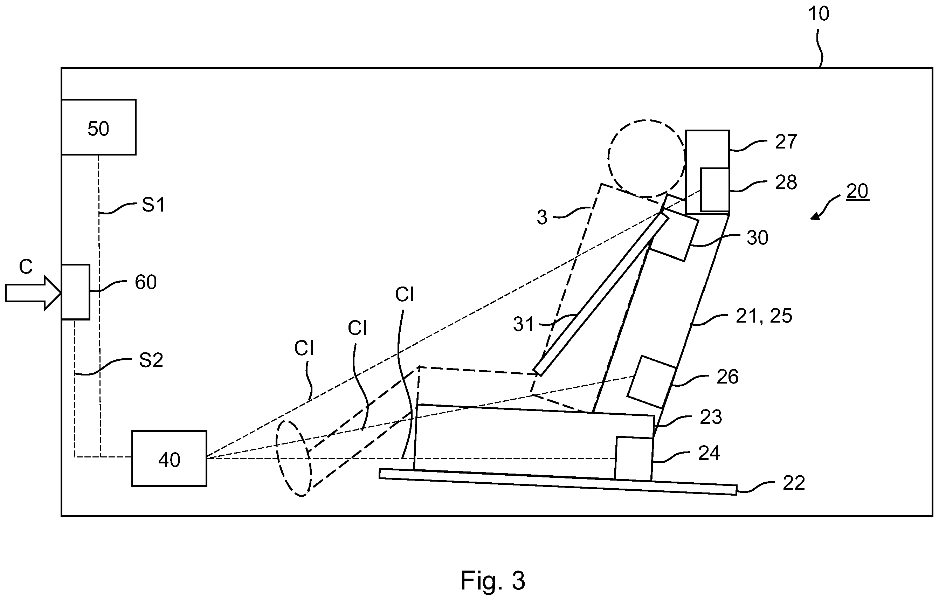

Figure 1 shows a driving situation of a vehicle 10 on a road 1 before a collision with an object 2, which may be a large animal for example. In this example, the driver as passenger 3 (see Fig. 3) of the vehicle 10 and/or the vehicle 10, e.g., by an at least partially automated driving mode, may not be able to prevent the collision anymore and it may be very likely or certain that a collision or, in other words, impact or crash with the object 2 will occur.

A collision situation in the future may be predicted or determined by the vehicle 10 based on detection means 50 (see Fig. 3), which may comprise one or more of a camera, sensor and radar, for example. The detection means 50 has a detection area DA as illustrated in Fig. 1. Accordingly, the collision may be detected pre collision or, in other words, ahead of the actual collision of the vehicle 10 with the object 2. For example, the detection means 50 and/or a data processing apparatus or computer of the vehicle, such as the data processing apparatus or computer 40 in Fig. 3, for example, may process the detection data from the detection means 50 and predict a collision situation, e.g., based on different parameters, such as driving speed and direction of the vehicle 10, position of the vehicle 10 and the object 2, movement of the object 2, etc.

Figure 2 shows a method 100 for adjusting a vehicle seat configuration 20 (see Fig. 3) inside the vehicle 10 for the collision, in particular as determined by the detection means 50. The method 100 may be carried out by another data processing apparatus or computer than shown in Fig. 3 or the one data processing apparatus or computer 40 shown in Fig. 3. Step 102 of method 100 corresponds to the pre-detection of the collision situation.

Figure 3 shows a portion of the vehicle 10 prior to the collision with the object 2 and at the time of pre-detection of the collision situation, in particular when a pre-collision signal S1 is being received. The pre-detection of the collision situation is illustrated herein as the generation of the pre-collision signal S1 indicative of the collision situation of the vehicle 10, which may or will occur when the object 2 impacts the vehicle 10. In this example, the pre-collision signal S1 is illustrated as being determined by the detection means 50 and send to a computer 40 of the vehicle 10. The computer 40 may be a control unit of the vehicle 10, for example. However, alternatively, the detection means 50 may merely provide detection data and send it to the computer 40 or any other computer or control unit, which, based on the detection data, generates the pre-collision signal S1 and may send it to the computer 40. Accordingly, the computer 40 may generate the pre-collision signal S1 itself based on the detection data from the detection means 50.

In step 104 of method 100, the pre-collision signal S1 is being received by the computer 40. The receival may correspond to the generation of the pre-collision signal S1 in case the computer 40 generates the pre-collision signal S1 as explained above.

In step 106 of method 100, upon receival of the pre-collision signal S1, control instructions CI for an actuator system of a vehicle seat configuration 20 of the vehicle 10 are provided. The provision may be of such form that the control instructions CI are being sent to the actuator system. The control instructions CI may be instructions to be processed by a corresponding control unit or computer of the actuator system or direct machine instructions to be executed by one or more actuator of the actuator system.

As may be seen in Fig. 3, the vehicle seat configuration 20 of this example comprises at least one vehicle seat 21, wherein the vehicle seat 21 comprises several portions, namely a seating area 23, a backrest 25 and a headrest 27. The passenger 3, such as a driver, is occupying the vehicle seat 21. Each one of the portions of the vehicle seat 21, in this example, comprises one actuator or, in other words, seat actuator. Accordingly, in this example, there is a seating area actuator 24, a backrest actuator 26 and a headrest actuator 28. It is possible to use more or less actuators in the actuator system. For example, it may be possible to use one actuator to actuate two or more portions and/or adjustments of the vehicle seat 21, e.g., height and position of the seating area 23 relative to the rail 22 in Fig. 3. One or more of the actuators of the actuator system may be brushless electric motors.

As may be further seen in Fig. 3, in this example, e.g., in step 108 of method 100, the control instructions CI are send to every one of the seating area actuator 24, backrest actuator 26 and headrest actuator 28. The control instructions CI may be the same for every single actuator 24, 26, 28 or different control instructions CI for every single actuator 24, 26, 28, for example. Alternatively, there may be an actuator system control unit or computer receiving the control instructions CI and correspondingly controlling the actuators 24, 26, 28, for example. Also, it is not required to actuate all actuators 24, 26, 28 per the control instructions CI. The control instructions CI may be configured to only actuate one or two of the actuators 24, 26, 28, for example.

The control instructions CI may be configured for adjustment, by one or more of the actuators 24, 26, 28 or, in other words, seat position actuators of the actuator system, of a relative position of the vehicle seat 21 inside the vehicle 10, in particular the different portions of the vehicle seat 21 or the vehicle seat 21 altogether. For example, a height of the seating area 23 of the vehicle seat 21 may be adjusted by the seating area actuator 24. Also, or alternatively, a relative position of the vehicle seat 21 inside the vehicle 10 may be adjusted by the seating area actuator 24 or any other actuator. In this example, the vehicle seat 21 may, for the purpose of adjusting the relative position, be moved along one or more rails 22 of the vehicle seat configuration 20. Further, or alternatively, a recline angle of the backrest 25 and/or of the headrest 27 may be adjusted, e.g., by the backrest actuator 26 and/or the headrest actuator 28.

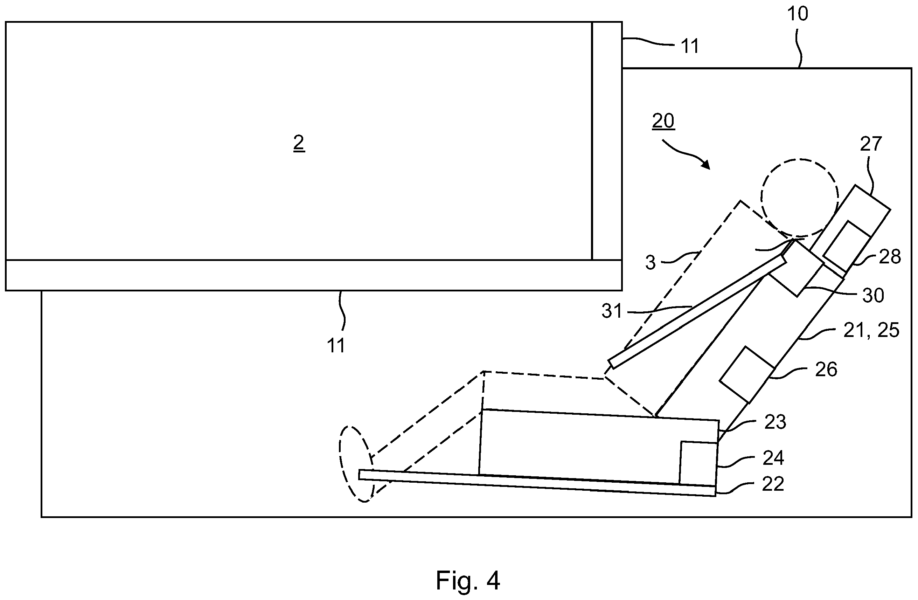

As may be seen in the example of Fig. 4, illustrating the portion of the vehicle 10 of Fig. 3, the vehicle seat configuration 20 has been adjusted before and/or during collision in a way such that the vehicle seat 21 has been moved back and the backrest 25 and the headrest 27 were reclined to put the passenger 3 into a more reclined position. Thereby, as may be seen from Fig. 4, the object 2 that collided with the vehicle 10 and any vehicle structure 11 that may be thereby deformed, e.g., the wind shield, A-pillar and/or roof of the vehicle 10, are further away from the passenger 3 than would have been the case for the same collision in Fig. 3, where no adjustment of the vehicle seat 21 has been performed yet, thereby reducing the risk of injury of the passenger 3 or preventing injury of the passenger 3.

As further seen in Figs. 3 and 4, the vehicle 10 may comprise a safety belt restraint system 30 integrated into the vehicle seat 21. This safety belt restraint system 30 may comprise a safety belt actuator (not shown) for tensioning a safety belt 31 of the safety belt restraint system 30 to secure the passenger 3 at the time of collision. The control instructions CI may further be configured for tensioning, by the safety belt actuator of the actuator system, the safety belt 31 or, in other words, seat belt.

As further shown in Fig. 3, the vehicle 10 may have a crash sensor 60, by means of which the collision C (as indicated in Fig. 3 via a force arrow denominated with the letter C) itself or, in other words, the impact of the object 2 at the vehicle 10, may be detected. By means of this crash sensor 60, a further signal S2 indicative of the collision situation of the vehicle 10 may be generated. Alternatively, the crash sensor 60 may send sensor data to the computer 40, which may then generate the signal S2. The signal S2 is an in-collision signal S2 indicative of the collision situation at the time of the collision of the vehicle 10. The signal S2 may also be received by the computer 40 and the receival of this signal may be part of the method 100.

For example, the in-collision signal S2 may be used to confirm the collision situation after receiving the pre-collision signal S1. For example, in the method 100, the control instructions CI may be changed or cancelled if the in-collision signal S2 is not received within a time value, in particular a predefined time. Also, or alternatively, for example, the control instructions CI may be changed or cancelled after receiving the in-collision signal S2. The change of the control instructions CI may correspond to a reduction or increase of an adjustment rate of the vehicle seat configuration 20, which may correspond to a power supply to one or more of the actuators 24, 26, 28, for example.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 1: road
- 2: object
- 3: passenger
- 10: vehicle
- 11: vehicle structure
- 20: vehicle seat configuration
- 21: vehicle seat
- 22: rail
- 23: seating area
- 24: seating area actuator
- 25: backrest
- 26: backrest actuator
- 27: headrest
- 28: headrest actuator
- 30: safety belt restraint system
- 31: safety belt
- 40: computer, data processing apparatus
- 50: detection means
- 60: crash sensor
- 100: method
- 102-108: steps
- C: collision
- CI: collision information
- S1: pre-collision signal
- S2: in-collision signal

## Claims

1. A method (100) for adjusting a vehicle seat configuration (20) inside a vehicle (10), the vehicle seat configuration (20) comprising a vehicle seat (21) and an actuator system for adjusting the vehicle seat configuration (20), the actuator system comprising at least one actuator (24, 26, 28), the at least one actuator (24, 26, 28) being a brushless electric motor, the method (100) comprising:
- receiving at least one signal (S1, S2) indicative of a collision situation of the vehicle (10),
- providing, upon receival of the at least one signal (S1, S2), control instructions (CI) for the actuator system to adjust the vehicle seat configuration (20).

2. The method (100) of claim 1, wherein the vehicle (10) comprises a safety belt restraint system (30) integrated into the vehicle seat (21).

3. The method (100) of claim 1 or 2, wherein one of the at least one signal (S1, S2) is a pre-collision signal (S1) indicative of a collision situation of the vehicle (10) prior to a collision of the vehicle (10).

4. The method (100) of any one of the previous claims, wherein one of the at least one signal (S1, S2) is an in-collision signal (S2) indicative of a collision situation of the vehicle (10) at the time of a collision of the vehicle (10).

5. The method (100) of claims 3 and 4, wherein the in-collision signal (S2) is being used to confirm the collision situation after receiving the pre-collision signal (S1).

6. The method (100) of claim 5, wherein the control instructions (CI) are changed or cancelled if the in-collision signal (S2) is not received within a time value.

7. The method (100) of claim 5 or 6, wherein the control instructions (CI) are changed or cancelled after receiving the in-collision signal (S2).

8. The method (100) of claim 6 or 7, wherein the control instructions (CI) are changed to reduce or increase an adjustment rate of the vehicle seat configuration (20).

9. The method (100) of any one of the previous claims, wherein the control instructions (CI) are configured for adjustment, by at least one seat position actuator (24, 26, 28) of the actuator system, of a position of the vehicle seat (21).

10. The method (100) of claim 9, wherein the control instructions (CI) are configured for adjustment of one or more of the following positions of the vehicle seat (21): a height of a seating area (23) of the vehicle seat (21), a relative position of the vehicle seat (21) inside the vehicle (20) and a recline angle of a backrest (25) of the vehicle seat (21).

11. The method (100) of any one of the previous claims, wherein the control instructions (CI) are configured for tensioning, by a safety belt actuator of the actuator system, a safety belt (31) of the safety belt restraint system (30).

12. The method (100) of any one of the previous claims, wherein the at least one signal (S1, S2) is indicative of a frontal collision situation of the vehicle (10) with an object (2).

13. A computer program product comprising instructions which, when the instructions are executed by a computer (40), cause the computer (40) to carry out the method (100) of any one of the previous claims.

14. A data processing apparatus (40) comprising means for carrying out the method (100) of any one of claims 1 to 12.

15. A vehicle (10) comprising the data processing apparatus (40) of claim 14.

## Amended claims

### Amended claims in accordance with Rule 137(2) EPC.

1. A method (100) for adjusting a vehicle seat configuration (20) inside a vehicle (10), the vehicle (10) comprising a safety belt restraint system (30) integrated into the vehicle seat (21), the vehicle seat configuration (20) comprising a vehicle seat (21) and an actuator system for adjusting the vehicle seat configuration (20), the actuator system comprising at least one actuator (24, 26, 28), the at least one actuator (24, 26, 28) being a brushless electric motor, the method (100) comprising:
- receiving at least one signal (S1, S2) indicative of a collision situation of the vehicle (10),
- providing, upon receival of the at least one signal (S1, S2), control instructions (CI) for the actuator system to adjust the vehicle seat configuration (20).

2. The method (100) of claim 1, wherein one of the at least one signal (S1, S2) is a pre-collision signal (S1) indicative of a collision situation of the vehicle (10) prior to a collision of the vehicle (10).

3. The method (100) of any one of the previous claims, wherein one of the at least one signal (S1, S2) is an in-collision signal (S2) indicative of a collision situation of the vehicle (10) at the time of a collision of the vehicle (10).

4. The method (100) of claims 2 and 3, wherein the in-collision signal (S2) is being used to confirm the collision situation after receiving the pre-collision signal (S1).

5. The method (100) of claim 4, wherein the control instructions (CI) are changed or cancelled if the in-collision signal (S2) is not received within a time value.

6. The method (100) of claim 4 or 5, wherein the control instructions (CI) are changed or cancelled after receiving the in-collision signal (S2).

7. The method (100) of claim 5 or 6, wherein the control instructions (CI) are changed to reduce or increase an adjustment rate of the vehicle seat configuration (20).

8. The method (100) of any one of the previous claims, wherein the control instructions (CI) are configured for adjustment, by at least one seat position actuator (24, 26, 28) of the actuator system, of a position of the vehicle seat (21).

9. The method (100) of claim 8, wherein the control instructions (CI) are configured for adjustment of one or more of the following positions of the vehicle seat (21): a height of a seating area (23) of the vehicle seat (21), a relative position of the vehicle seat (21) inside the vehicle (20) and a recline angle of a backrest (25) of the vehicle seat (21).

10. The method (100) of any one of the previous claims, wherein the control instructions (CI) are configured for tensioning, by a safety belt actuator of the actuator system, a safety belt (31) of the safety belt restraint system (30).

11. The method (100) of any one of the previous claims, wherein the at least one signal (S1, S2) is indicative of a frontal collision situation of the vehicle (10) with an object (2).

12. A computer program product comprising instructions which, when the instructions are executed by a computer (40), cause the computer (40) to carry out the method (100) of any one of the previous claims.

13. A data processing apparatus (40) comprising means for carrying out the method (100) of any one of claims 1 to 11.

14. A vehicle (10) comprising the data processing apparatus (40) of claim 13.
